# EUROPEAN PATENT APPLICATION

(11) **EP 3 093 754 A1**
(43) Date of publication of application: **16.11.2016**
(21) Application number: 14882833.8
(22) Date of filing: 04.06.2014
(51) Int. Cl.: G06F 3/14

(54) **SPLIT-SCREEN PROCESSING METHOD AND DEVICE, AND COMPUTER STORAGE MEDIUM**

(30) Priority: 18.02.2014 CN 201410055692
(71) Applicant: ZTE Corporation, Guangdong 518057 (CN)
(72) Inventor: YAN, Haiqing, Shenzhen Guangdong 518057 (CN); LIU, Lizhang, Shenzhen Guangdong 518057 (CN); XUE, Tao, Shenzhen Guangdong 518057 (CN)
(74) Representative: Awapatent AB
(86) International application number: PCT/CN2014/079188
(87) International publication number: WO 2015/123937

(57) **Abstract**

The embodiments of the present invention disclose a split-screen processing method and device. The method includes: displaying a full-service split-screen menu list; acquiring split-screen request information according to an operation on the full-service split-screen menu list; and determining and executing a corresponding split-screen operation according to the split-screen request information and a preset split-screen control policy. The device includes: an interaction module configured to acquire a full-service split-screen menu list from a storage module and display the full-service split-screen menu list; and acquire split-screen request information according to an operation on the full-service split-screen menu list; a determination module configured to determine an operation which needs to be executed according to the split-screen request information and a split-screen control policy which is stored in the storage module; the storage module configured to store the full-service split-screen menu list and the split-screen control policy; and an execution module configured to execute a corresponding split-screen operation according to a determination result of the determination module.

## Description

### Technical Field

The present invention relates to the field of mobile communication, in particular to a split-screen processing method and device and a computer storage medium.

### Background of the Related Art

With the continuous development of mobile communication technologies, types of terminal services become increasingly rich, and correspondingly requirements of terminal users for simultaneous access to types of services become increasingly higher. A split-screen technology divides one screen of a terminal into a plurality of windows, each window is provided to one APP and thus multiple tasks can simultaneously run on the same desktop.

Based on the split-screen technology, the user can watch a video while browsing a webpage, and watching the video and browsing the webpage do not interfere with each other. Besides, in a split-screen mode, the user can also freely change the positions of two screens and the size of each screen. For example, in a "video + photo album" multi-task mode, when we want to view photos, a photo window can be enlarged, and when we want to watch a video, a video window can be enlarged. In addition, multi-terminal synchronous sharing can be performed in various windows. Under the situation that the operation for "window 1" in a mobile phone is not influenced, "window 2" of the mobile phone is synchronously shared to a television or an LED terminal to perfectly realize synchronous operation of a large screen and a small window.

However, although the split-screen technology of the mobile terminal can bring a totally new user experience, usually normal split-screen display cannot be realized for reasons that applications simultaneously occupy the device, a conflict occurs during resource sharing of applications and the like when the applications are in a split-screen state, and the system stability is influenced. At present, the existing technological solutions only hide the applications which cannot apply screen splitting so as to not participate in screen splitting. As a result, great limitations are caused while a user uses the split-screen, which means that screen splitting can only be applied to limited applications and the user experience is relatively poorer.

### Summary of the Invention

In view of the foregoing, the main purpose of the present invention is to provide a split-screen processing method and device and a computer storage medium, which can improve the system stability and improve the user experience.

In order to achieve the purpose, the technical solution of the embodiments of the present invention is realized as follows:
a split-screen processing method comprises:
   displaying a full-service split-screen menu list;
   acquiring split-screen request information according to an operation on the full-service split-screen menu list; and
   determining and executing a corresponding split-screen operation according to the split-screen request information and a preset split-screen control policy.

The split-screen request information at least comprises a target window and a target application, and determining a corresponding split-screen operation according to the split-screen request information and a preset split-screen control policy comprises:
if the target application needs to occupy a same resource as a first application, and the resource can only be occupied by one application at a same moment, not allowing the target application to run in the target window, or allowing the target application to run in the target window but not allowing the first application to continuously run, wherein the first application is an application which is running in a window in a split-screen mode;
if the target application needs to occupy a same resource as the first application, and the resource can be occupied by a plurality of applications at a same moment, allowing the target application to run in the target window; and
if a resource which needs to be occupied by the target application is different from a resource which is occupied by the first application, allowing the target application to run in the target window.

If the target application is the same as the first application, determining a corresponding split-screen operation according to the split-screen request information and a preset split-screen control policy comprises:
if the target application is not allowed to repetitively run, and the target window is different from the window in which the first application runs, prompting a user that the application has already been started and does not need to be started again, or allowing the target application to run in the target window but freezing and locking the first application to make the first application unable to be used; and
if the target application is not allowed to repetitively run, and the target window is the same as the window in which the first application runs, continuously running the first application.

The method further comprises: editing the full-service split-screen menu list.

The split-screen mode comprises a split-screen state and a floating-screen state.

A split-screen processing device comprises an interaction module, a determination module, a storage module and an execution module, wherein,
the interaction module is configured to acquire a full-service split-screen menu list from the storage module and display the full-service split-screen menu list; and acquire split-screen request information according to an operation on the full-service split-screen menu list;
the determination module is configured to determine an operation which needs to be executed according to the split-screen request information and a split-screen control policy which is stored in the storage module;
the storage module is configured to store the full-service split-screen menu list and the split-screen control policy; and
the execution module is configured to execute a corresponding split-screen operation according to a determination result of the determination module.

The split-screen request information at least comprises a target window and a target application, and the determination module is configured to:
if the target application needs to occupy a same resource as a first application, and the resource can only be occupied by one application at a same moment, determine to not allow the target application to run in the target window, or determine to allow the target application to run in the target window but not allow the first application to continuously run, wherein the first application is an application which is running in a window in a split-screen mode;
if the target application needs to occupy a same resource as the first application, and the resource can be occupied by a plurality of applications at a same moment, determine to allow the target application to run in the target window; and
if a resource which needs to be occupied by the target application is different from a resource which is occupied by the first application, determine to allow the target application to run in the target window.

If the target application is the same as the first application, the determination module is configured to:
if the target application is not allowed to repetitively run, and the target window is different from the window in which the first application runs, determine that it is needed to prompt a user that the application has already been started and does not need to be started again, or determine to allow the target application to run in the target window but need to freeze and lock the first application; and
if the target application is not allowed to repetitively run and the target window is the same as the window in which the first application runs, determine to continuously run the first application.

The device further comprises an editing module, and
the interaction module is further configured to acquire an editing request; and
the editing module is configured to edit the full-service split-screen menu list which is stored in the storage module according to the editing request.

A computer storage medium is provided, in which computer-executable instructions are stored and are used for implementing the method.

According to the split-screen method and device and the computer storage medium provided by the embodiments of the present invention, the method comprises displaying a full-service split-screen menu list; acquiring split-screen request information according to an operation on the full-service split-screen menu list; and determining and executing a corresponding split-screen operation according to the split-screen request information and a preset split-screen control policy. Through the split-screen method and device provided by the embodiments of the present invention, by controlling split-the screens splitting based on the split-screen control policy, the split-screen abnormality can be avoided and the system stability can be improved. In addition, the embodiments of the present invention can realize split-screen processing based on full-service, and thus can improve the user experience.

### Brief Description of Drawings

FIG. 1 is a flowchart of a split-screen processing method provided by the embodiment of the present invention;
FIG. 2 is a structural schematic diagram of a split-screen processing device provided by the embodiment of the present invention;
FIG. 3 is a structural schematic diagram of another split-screen processing device provided by the embodiment of the present invention;
FIG. 4 is a flowchart of a split-screen processing method provided by embodiment 1 of the present invention;
FIG. 5 is a flowchart of a split-screen processing provided by embodiment 2 of the present invention;
FIG. 6 is a flowchart of a split-screen processing provided by embodiment 3 of the present invention;
FIG. 7 is a flowchart of a split-screen processing provided by embodiment 4 of the present invention;
FIG. 8 is a flowchart of a split-screen processing provided by embodiment 5 of the present invention;
FIG. 9 is a flowchart of a split-screen processing provided by embodiment 6 of the present invention;
FIG. 10 is a flowchart of a split-screen processing provided by embodiment 7 of the present invention;
FIG. 11 is a flowchart of a split-screen processing method provided by embodiment 8 of the present invention;
FIG. 12 is a flowchart of a split-screen processing method provided by embodiment 9 of the present invention.

### Embodiments

In various embodiments of the present invention, a full-service split-screen menu list is displayed; split-screen request information is acquired according to an operation on the full-service split-screen menu list; and a corresponding split-screen operation is determined and executed according to the split-screen request information and a preset split-screen control policy.

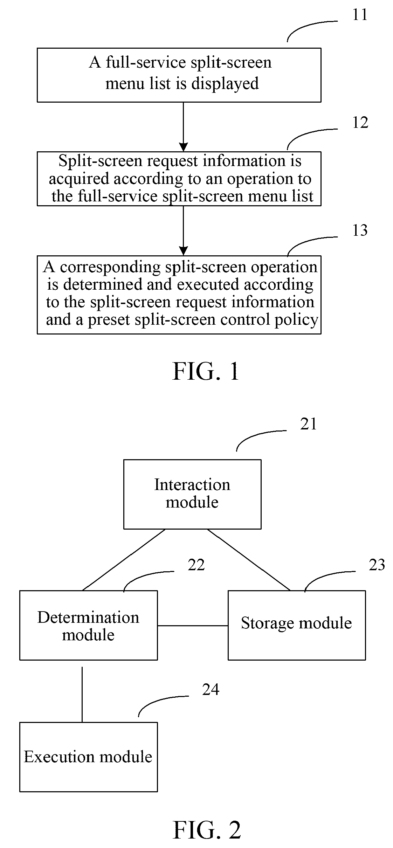

FIG. 1 illustrates a split-screen processing method provided by the embodiment of the present invention. As illustrated in FIG. 1, the method comprises:
In step 11, a full-service split-screen menu list is displayed.

Alternatively, a full-service split-screen menu list is displayed to a user according to an operation performed by the user on a terminal device.

In step 12, split-screen request information is acquired according to an operation on the full-service split-screen menu list.

Alternatively, split-screen request information is acquired according to operations such as clicking and dragging performed by the user on the full-service split-screen menu list.

In step 13, a corresponding split-screen operation is determined and executed according to the split-screen request information and a preset split-screen control policy.

It needs to be stated that the method provided by the embodiment of the present invention is applied to a terminal device, and when the terminal device runs in a split-screen mode, a screen is divided into at least two windows, and each window may be used for running one application.

Alternatively, the split-screen request information at least comprises a target window and a target application, and determining the corresponding split-screen operation according to the split-screen request information and the preset split-screen control policy comprises:
if the target application needs to occupy the same resource as a first application and the resource can only be occupied by one application at the same moment, the target application is not allowed to run in the target window, or the target application is allowed to run in the target window but the first application is not allowed to continuously run, wherein the first application is an application which is running in a window in a split-screen mode;
if the target application needs to occupy the same resource as the first application and the resource may be occupied by a plurality of applications at the same moment, the target application is allowed to run in the target window; and
if a resource which needs to be occupied by the target application is different from a resource which is occupied by the first application, the target application is allowed to run in the target window.

It needs to be stated that the target window may be a window in which the first application runs and may also be not the window in which the first application runs; and the target application and the first application may be the same application and may also be different applications, and split-screen conflict determination mechanisms described in the split-screen control policy are also applicable.

Alternatively, if the target application is the same as the first application, determining the corresponding split-screen operation according to the split-screen request information and the preset split-screen control policy comprises:
if the target application is not allowed to repetitively run and the target window is different from the window in which the first application runs, a user is prompted that the application has already been started and does not need to be started again, or the target application is allowed to run in the target window but the first application is frozen and locked, and the first application cannot be used; and
if the target application is not allowed to repetitively run, and the target window is the same as the window in which the first application runs, the first application runs continuously.

Alternatively, the method further comprises:
the full-service split-screen menu list is edited.

Alternatively, the full-service split-screen menu list is edited according to the user operation, and editing the full-service split-screen menu list includes but not limited to one or more operations as follows: addition, deletion and sequence adjustment.

Alternatively, the split-screen mode comprises a split-screen state and a floating-screen state.

It needs to be stated that, with respect to the making of the split-screen control policy, full-service applications may be classified and mapped to corresponding conflict mechanisms to complete the determination of whether the applications allow screen splitting.

The embodiment of the present invention further correspondingly provides a split-screen processing device. As illustrated in FIG. 2, the device comprises an interaction module 21, a determination module 22, a storage module 23 and an execution module 24, wherein,
the interaction module 21 is configured to acquire a full-service split-screen menu list from a storage module and display the full-service split-screen menu list; and acquire split-screen request information according to an operation on the full-service split-screen menu list;
the determination module 22 is configured to determine an operation which needs to be executed according to the split-screen request information and a split-screen control policy which is stored in the storage module 23; and under various scenarios, different processing mechanisms need to be adopted, and preferably, a split-screen processing result is determined according to factors such as the state of the split-screen application, and/or boot entry, and/or dragging position and the split-screen control policy;
the storage module 23 is configured to store the full-service split-screen menu list and the split-screen control policy; and
the execution module 24 is configured to execute a corresponding split-screen operation according to a determination result of the determination module 22.

Alternatively, the split-screen request information at least comprises a target window and a target application, and the determination module 22 is configured to:
if the target application needs to occupy the same resource as a first application and the resource can only be occupied by one application at the same moment, determine to not allow the target application to run in the target window, or determine to allow the target application to run in the target window but not allow the first application to continuously run, wherein the first application is an application which is run in a window in a split-screen mode;
if the target application needs to occupy the same resource as the first application, and the resource may be occupied by a plurality of applications at the same moment, determine to allow the target application to run in the target window; and
if a resource which needs to be occupied by the target application is different from a resource which is occupied by the first application, determine to allow the target application to run in the target window.

Alternatively, if the target application is the same as the first application, the determination module 22 is configured to:
if the target application is not allowed to repetitively run, and the target window is different from the window in which the first application runs, determine that it is needed to prompt a user that the application has already been started and does not need to be started again, or determine to allow the target application to run in the target window but need to freeze and lock the first application; and
if the target application is not allowed to repetitively run, and the target window is the same as the window in which the first application runs, determine to continuously run the first application.

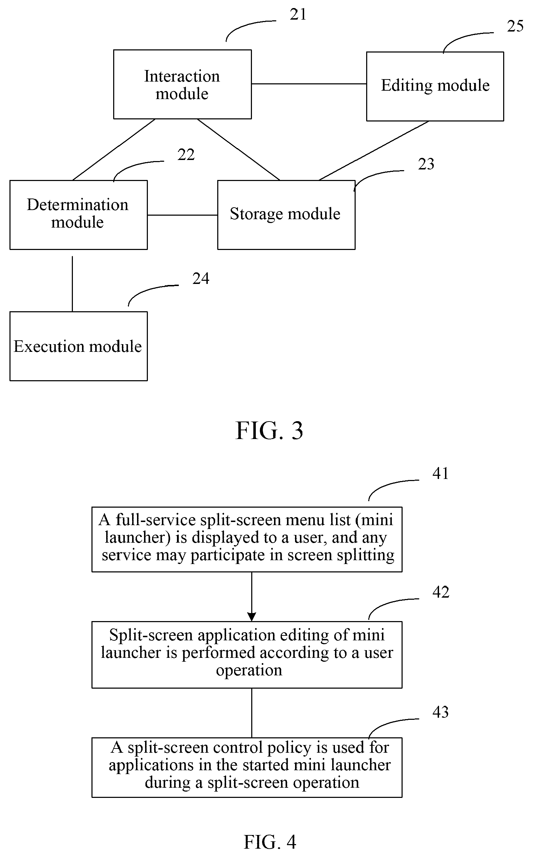

Alternatively, as illustrated in FIG. 3, the device further comprises an editing module 25,
the interaction module 21 is further configured to acquire an editing request; alternatively, the editing request may be acquired according to a user operation based on a full-service split-screen menu list interface, and the editing request may also be acquired according to the user operation based on another non-full-service split-screen menu list interface; and
the editing module 25 is configured to edit the full-service split-screen menu list which is stored in the storage module 23 according to the editing request. For example, applications which do not participate in screen splitting are edited, and the applications which cannot participate in screen splitting are removed from a split-screen menu list "mini launcher" to a non-split-screen service menu list to facilitate the view of the user.

The embodiment of the present invention further provides a computer storage medium, wherein computer-executable instructions are stored in the computer storage medium, and the computer-executable instructions are used for implementing the method provided by the embodiment of the present invention.

The above-mentioned units may be implemented by Central Processing Units (CPUs), Digital Signal Processors (DSPs) or Field Programmable Gate Arrays (FPGAs) in electronic devices.

One skilled in the art should understand that the embodiments of the present invention can be provided in the form of methods, systems or computer program products. Therefore, the present invention may adopt the form of hardware embodiments, software embodiments or combined software and hardware embodiments. In addition, the present invention can adopt the form of computer program products implemented based on one or more of computer usable memory media (including but not limited to disk memories, optical memories, etc.) containing computer usable program codes therein.

The present invention is described by referring to flowcharts and/or block diagrams of the method, the apparatus (system) and the computer program product according to the embodiments of the present invention. It should be understood that each process and/or block in the flowcharts and/or block diagrams and combinations of processes and/or blocks in the flowcharts and/or block diagrams can be implemented by computer program instructions. These computer program instructions can be provided to processors of general-purpose computers, special-purpose computers, embedded computers or other programmable data processing devices to produce a machine, such that instructions executed through processors of computers or other programmable data processing devices produce apparatuses for implementing functions designated in one process or more processes of the flowcharts and/or one block or more blocks of the block diagrams.

These computer program instructions can also be stored in computer-readable memories which can guide computers or other programmable data processing devices to work in a specific manner, such that the instructions stored in the computer-readable memories produce products comprising instruction devices, and the instruction devices implement functions designated in one process or more processes of the flowcharts and/or one block or more blocks of the block diagrams.

These computer program instructions can also be loaded to computers or other programmable data processing devices, such that a series of operation steps are executed on the computers or other programmable devices to perform processing realized by the computers, such that the instructions which are executed on the computers or other programmable devices provide steps for implementing functions designated in one process or more processes of the flowcharts and/or one block or more blocks of the block diagrams.

The technical solution of the present invention will be further described below in detail through specific embodiments.

### Embodiment 1

FIG. 4 is a flowchart of a split-screen processing method provided by embodiment 1 of the present invention. As illustrated in FIG. 4, the process comprises:
In step 41, a full-service split-screen menu list "mini launcher" is displayed to a user and any service may participate in screen splitting.

With respect to the start of mini launcher, a menu key may be pressed for a long time on any interface to start screen splitting, a split-screen button appears and the split-screen button is clicked to start the mini launcher.

In step 42, split-screen application editing of mini launcher is performed according to a user operation.

In this embodiment, applications which do not participate in screen splitting are allowed to be edited, and the applications which cannot participate in screen splitting are removed from a split-screen menu list mini launcher to a non-split-screen service menu list to facilitate the view by the user.

In step 43, a split-screen control policy is used for applications in the started mini launcher during a screen splitting operation.

In this embodiment, the split-screen control policy of the applications is as follows:
1) At any moment, only one application is allowed to occupy a resource (which may be a data resource and may also be a physical device). Whether a split-screen application and an existing application occupy the same resource is determined; and if the same resource will be occupied, screen splitting is not allowed and a prompt is given. Taking a file manager as an example, if the file manager has already been started and the file manager will be started again at this moment, a problem of operating the same data area will be caused, thus the starting is not allowed; and for another example, if a flashlight application has already been started and occupies a flashlight resource, and if a camera application is also started at this moment, screen splitting is not allowed because the camera also needs the flashlight resource.
2) At any moment, a plurality of applications are allowed to occupy a resource. Screen splitting is allowed for the applications, and the same resource is used, for example, an audio player and a video player simultaneously use a speaker for playing.
3) At any moment, a plurality of applications are allowed to respectively use different resources. Screen splitting is allowed for the applications, for example, FM uses an earphone and an audio player uses a speaker.

### Embodiment 2

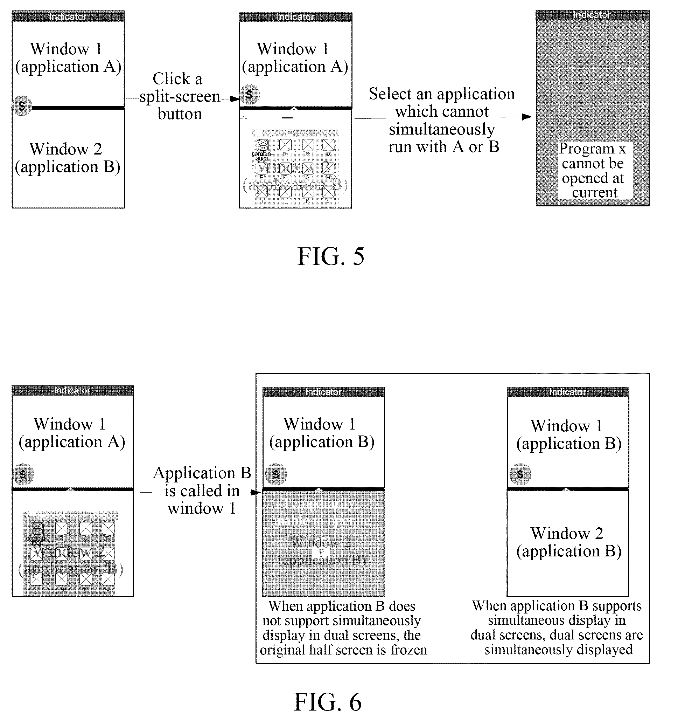

FIG. 5 is a flowchart of a split-screen processing provided by embodiment 2 of the present invention. As illustrated in FIG. 5, the process comprises:
a terminal device is in a split-screen mode, application A runs in window 1 and application B runs in window 2;
mini launcher is displayed according to a user operation of clicking a split-screen button; and
if it is to determine that a user selects an application which cannot run at the same time as the application A or the application B is running according to the user operation on the mini launcher, a prompt is popped up to remind the user that the application cannot be opened currently.

### Embodiment 3

FIG. 6 is a flowchart of a split-screen processing provided by embodiment 3 of the present invention. As illustrated in FIG. 6, the process comprises:
a terminal device is in a split-screen mode, application A runs in window 1 and application B runs in window 2; it is to determine that the application B needs to run in the window 1 according to a user operation on mini launcher;
if the application B does not support simultaneously-running in dual windows, the application B runs in the window 1 and the window 2 is frozen; and if the application B supports simultaneously-running in dual windows, the application B runs in the window 1 and the application B continuously runs in the window 2.

### Embodiment 4

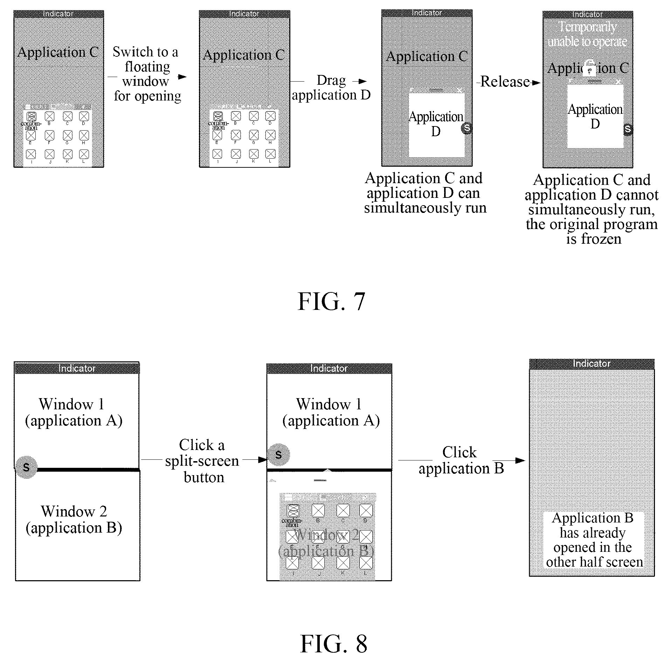

FIG. 7 is a flowchart of a split-screen processing provided by embodiment 4 of the present invention. As illustrated in FIG. 7, the process comprises:
application C runs at a terminal device; and
if it is to determine that application D which cannot run at the same time as the application C is running needs to run in a floating screen 1 in a split-screen mode, the application D runs in the floating screen 1 and the application C which is running is frozen.

### Embodiment 5

FIG. 8 is a flowchart of a split-screen processing provided by embodiment 5 of the present invention. As illustrated in FIG. 8, the process comprises:
a terminal device is in a split-screen mode, application A runs in window 1 and application B runs in window 2;
mini launcher is displayed according to a user operation of clicking a split-screen button;
it is to determine that the application B needs to run in the window 1 according to a user operation of clicking the mini launcher; and
if the application B does not support simultaneously-running in dual windows, the user is prompted that the application B has already run in the window 2.

### Embodiment 6

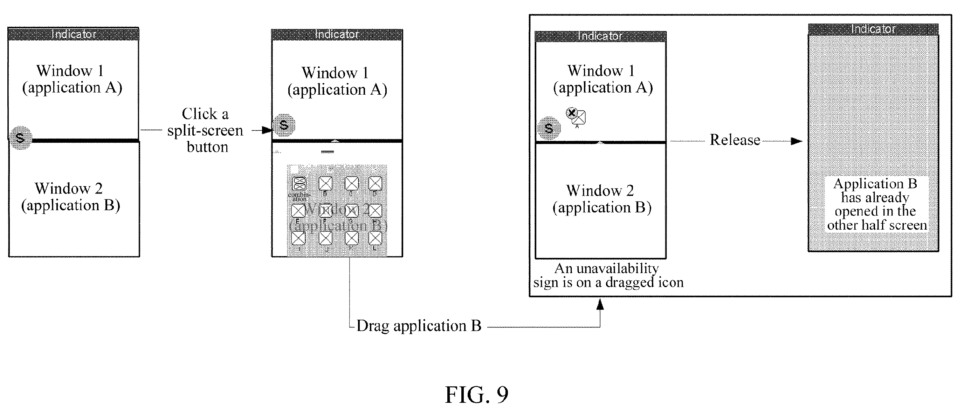

FIG. 9 is a flowchart of a split-screen processing provided by embodiment 6 of the present invention. As illustrated in FIG. 9, the flow comprises:
a terminal device is in a split-screen mode, application A runs in window 1 and application B runs in window 2;
mini launcher is displayed according to a user operation of clicking a split-screen button;
it is to determine the application B needs to runs in the window 1 according to a user operation of dragging the mini launcher; and
if the application B does not support simultaneously-running in dual windows, the user is prompted that the application B has already run in the window 2.
It needs to be stated that, when an icon of the application B is dragged into the window 1, an unavailability sign may be included.

### Embodiment 7

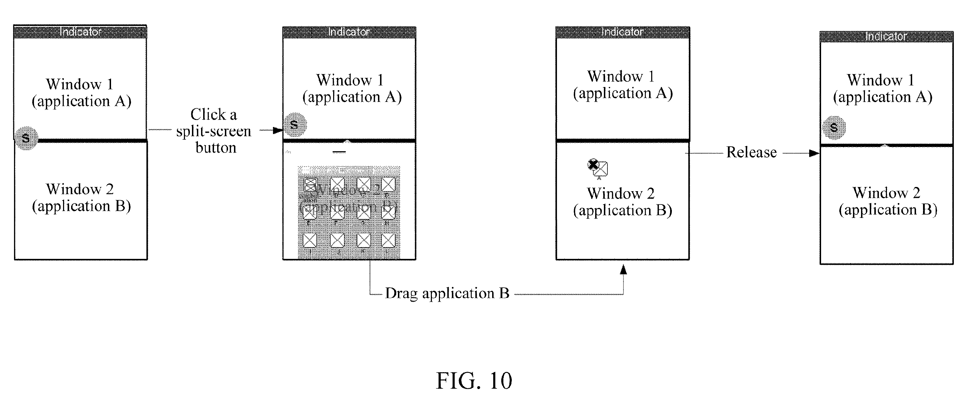

FIG. 10 is a flowchart of a split-screen processing provided by embodiment 7 of the present invention. As illustrated in FIG. 10, the flow comprises:
a terminal device is in a split-screen mode, application A runs in window 1 and application B runs in window 2;
mini launcher is displayed according to a user operation of clicking a split-screen button;
it is to determine that the application B needs to run in the window 2 according to a user operation of dragging the mini launcher; and
the application B continuously runs in the window 2.

It needs to be stated that, when the icon of the application B is dragged into the window 2, an unavailability sign may be included.

### Embodiment 8

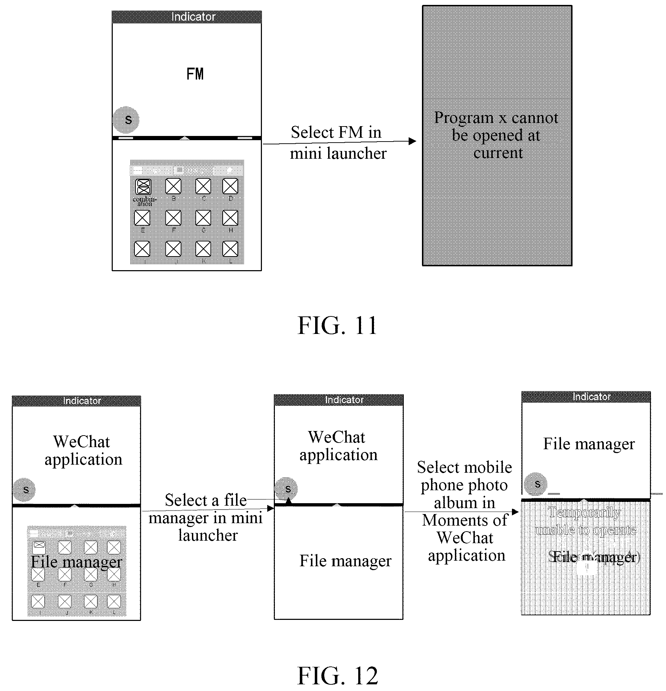

This embodiment is described by taking an FM application as an example. FIG. 11 is a flowchart of a split-screen processing method provided by embodiment 8 of the present invention. As illustrated in FIG. 11, the process comprises:
a MENU key is pressed for a long time (or a split-screen icon on a main menu is clicked) to enter a dual-screen start mode to start an FM application;
a split-screen button is clicked, a mini launcher split-screen application menu appears and the FM application is selected again; and
since the FM application is an application which only allows one application to occupy the same antenna device, and the FM application is not allowed to be started again to perform screen splitting according to a split-screen application conflict mechanism, the user is prompted that the FM application cannot be opened currently.

### Embodiment 9

This embodiment is described by taking a file manager application as an example. FIG. 12 is a flowchart of a split-screen processing method provided by embodiment 9 of the present invention. As illustrated in FIG. 12, the flow comprises:
a MENU key is pressed for a long time (or a split-screen icon on a main menu is clicked) to enter a dual-screen start mode to start a WeChat application;
a split-screen button is clicked, then a mini launcher split-screen application menu appears and a file manager application is selected;
since the WeChat application and the file manager are allowed to be displayed in the split screen according to a split-screen application conflict mechanism, the file manager runs in a split-screen mode;
the WeChat application is focused again, a mobile phone photo album is selected in Moments of the WeChat application and the file manager application is started again; and
since the file manager application involves simultaneous operation of resources in a data area, the file manager is not allowed to be started again to perform screen splitting according to the split-screen application conflict mechanism, the file manager which is originally started in a half screen is locked and frozen and only the file manager which is newly started is allowed to be used.

It can be seen that, by adopting the technical solution provided by the embodiments of the present invention, in one aspect, the problem existing in display of full-service split-screens of the mobile terminal can be solved; and in another aspect, a totally new split-screen user experience is brought.

It should be understood that the above-mentioned embodiments are just preferred embodiments of the present invention and shall not hereby limit the patent scope of the present invention, and equivalent structure or process variation made by using the contents in description and the drawings of the present invention or direct or indirect application to other related technical fields shall be also included in the patent protection scope of the present invention.

## Claims

1. A split-screen processing method, wherein the method comprises:
displaying a full-service split-screen menu list;
acquiring split-screen request information according to an operation on the full-service split-screen menu list; and
determining and executing a corresponding split-screen operation according to the split-screen request information and a preset split-screen control policy.

2. The method according to claim 1, wherein the split-screen request information at least comprises a target window and a target application, and determining a corresponding split-screen operation according to the split-screen request information and a preset split-screen control policy comprises:
if the target application needs to occupy a same resource as a first application, and the resource can only be occupied by one application at a same moment, not allowing the target application to run in the target window, or allowing the target application to run in the target window but not allowing the first application to continuously run, wherein the first application is an application which is running in a window in a split-screen mode;
if the target application needs to occupy a same resource as the first application, and the resource can be occupied by a plurality of applications at a same moment, allowing the target application to run in the target window; and
if a resource which needs to be occupied by the target application is different from a resource which is occupied by the first application, allowing the target application to run in the target window.

3. The method according to claim 2, wherein, if the target application is the same as the first application, determining a corresponding split-screen operation according to the split-screen request information and a preset split-screen control policy comprises:
if the target application is not allowed to repetitively run, and the target window is different from the window in which the first application runs, prompting a user that the application has already been started and does not need to be started again, or allowing the target application to run in the target window but freezing and locking the first application to make the first application unable to be used; and
if the target application is not allowed to repetitively run, and the target window is the same as the window in which the first application runs, continuously running the first application.

4. The method according to any one of claims 1-3, wherein the method further comprises: editing the full-service split-screen menu list.

5. The method according to claim 2 or 3, wherein the split-screen mode comprises a split-screen state and a floating-screen state.

6. A split-screen processing device, wherein the device comprises an interaction module, a determination module, a storage module and an execution module, wherein,
the interaction module is configured to acquire a full-service split-screen menu list from the storage module and display the full-service split-screen menu list; and acquire split-screen request information according to an operation on the full-service split-screen menu list;
the determination module is configured to determine an operation which needs to be executed according to the split-screen request information and a split-screen control policy which is stored in the storage module;
the storage module is configured to store the full-service split-screen menu list and the split-screen control policy; and
the execution module is configured to execute a corresponding split-screen operation according to a determination result of the determination module.

7. The device according to claim 6, wherein the split-screen request information at least comprises a target window and a target application, and the determination module is configured to:
if the target application needs to occupy a same resource as a first application, and the resource can only be occupied by one application at a same moment, determine to not allow the target application to run in the target window, or determine to allow the target application to run in the target window but not allow the first application to continuously run, wherein the first application is an application which is running in a window in a split-screen mode;
if the target application needs to occupy a same resource as the first application, and the resource can be occupied by a plurality of applications at a same moment, determine to allow the target application to run in the target window; and
if a resource which needs to be occupied by the target application is different from a resource which is occupied by the first application, determine to allow the target application to run in the target window.

8. The device according to claim 7, wherein, if the target application is the same as the first application, the determination module is configured to:
if the target application is not allowed to repetitively run, and the target window is different from the window in which the first application runs, determine that it is needed to prompt a user that the application has already been started and does not need to be started again, or determine to allow the target application to run in the target window but need to freeze and lock the first application; and
if the target application is not allowed to repetitively run, and the target window is the same as the window in which the first application runs, determine to continuously run the first application.

9. The device according to any one of claims 6-7, wherein the device further comprises an editing module, and
the interaction module is further configured to acquire an editing request; and
the editing module is configured to edit the full-service split-screen menu list which is stored in the storage module according to the editing request.

10. A computer storage medium, in which computer-executable instructions are stored and are used for implementing the method according to any one of claims 1-5.
